# EUROPEAN PATENT APPLICATION

(11) **EP 3 549 548 A1**
(43) Date of publication of application: **09.10.2019**
(21) Application number: 17876630.9
(22) Date of filing: 27.09.2017
(51) Int. Cl.: A61C 9/00

(54) **TRAY SYSTEM FOR DENTISTRY**

(30) Priority: 29.11.2016 JP 2016231327
(71) Applicant: GC Corporation, Sunto-gun, Shizuoka 410-1307 (JP)
(72) Inventor: SASAKI, Keiichi, Sendai-shi Miyagi 980-8577 (JP); MICHII, Takayuki, Tokyo 174-8585 (JP)
(74) Representative: Müller-Boré & Partner Patentanwälte PartG mbB
(86) International application number: PCT/JP2017/034887
(87) International publication number: WO 2018/100855

(57) **Abstract**

A dental tray system includes a maxillary impression tray configured to be filled with an impression material and to take an impression of an upper jaw side of an oral cavity; a mandibular impression tray configured to be filled with the impression material and to take the impression of a lower jaw side of the oral cavity; and a support plate provided between the maxillary impression tray and the mandibular impression tray and configured to movably support the maxillary impression tray and the mandibular impression tray in a front-to-rear direction.

## Description

### TECHNICAL FIELD

The present invention relates to a dental tray system.

### BACKGROUND ART

In order to ensure preferable occlusion in a manufacture of dentures and the like, it is necessary to accurately perform bite registration of a patient. Accordingly, a dental impression tray for simultaneously taking impressions of a maxilla and a mandible is known, in which a maxillary impression tray and a mandibular impression tray, on each which an impression material is filled, are integrally arranged in an oral cavity (for example, refer to Patent Document 1).

### PRIOR ART DOCUMENT

### PATENT DOCUMENT

Patent Document 1: Japanese Laid-Open Patent Publication No. 2001-333917

### SUMMARY OF THE INVENTION

### PROBLEMS TO BE SOLVED BY THE INVENTION

Occlusion states of the maxillary and the mandibular are different depending on the patient; the maxillary and the mandibular may be normal with no anteroposterior displacement, or one of the maxilla and the mandible may protrude anteriorly over an other. The dental impression tray described in Patent Document 1 described above fixes a maxillary impression tray and a mandibular impression tray with each other; hence, the dental impression tray may not correspond to a jaw position varying on each patient and may not be able to accurately obtain the bite registration.

An objective of the present invention is to provide a dental tray system, which has been made in view of the above and is capable of accurately performing the bite registration depending on the jaw position.

### MEANS FOR SOLVING THE PROBLEMS

According to one aspect of the present invention, a dental tray system includes a maxillary impression tray configured to be filled with an impression material and to take an impression of an upper jaw side of an oral cavity; a mandibular impression tray configured to be filled with the impression material and to take the impression of a lower jaw side of the oral cavity; and a support plate provided between the maxillary impression tray and the mandibular impression tray and configured to movably support the maxillary impression tray and the mandibular impression tray in a front-to-rear direction.

### EFFECTS OF THE INVENTION

According to an embodiment of the present invention, a dental tray system is provided that can accurately perform bite registration depending on the jaw position.

### BRIEF DESCRIPTION OF THE DRAWINGS

FIG. 1 is a perspective view of a dental tray system in an embodiment.
FIG. 2 is a perspective view of a support plate in the embodiment.
FIG. 3 is a diagram illustrating the support plate in the embodiment.
FIG. 4 is a diagram illustrating a maxillary impression tray in the embodiment.
FIG. 5 is a diagram illustrating a mandibular impression tray in the embodiment.
FIG. 6 is a back view of the dental tray system in the embodiment.
FIG. 7 is a view illustrating a movement of the maxillary impression tray and the mandibular impression tray in the embodiment.

### EMBODIMENT OF THE INVENTION

Hereinafter, an embodiment of the present invention will be described with reference to the drawings. In each drawing, the same component parts may be denoted by the same reference numerals and duplicate descriptions may be omitted.

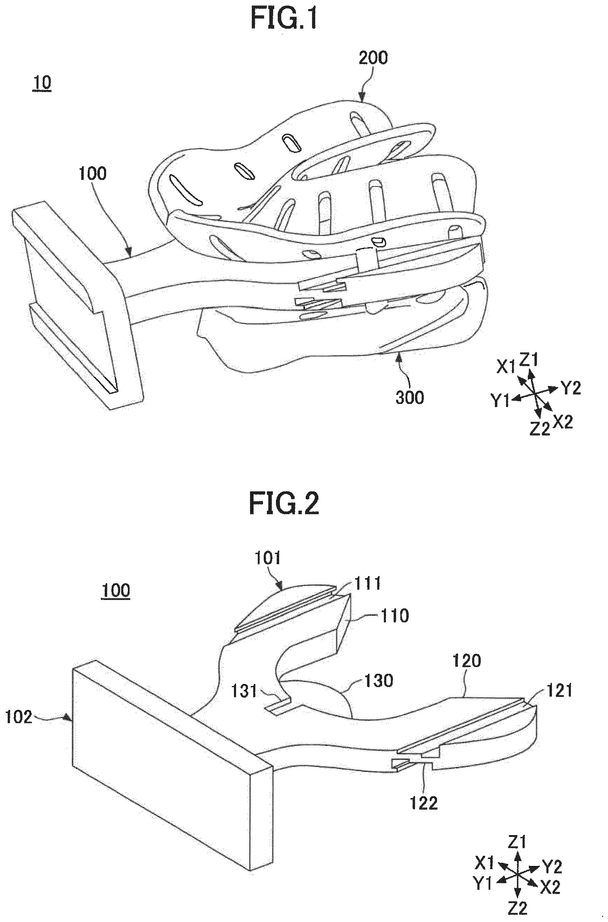

FIG. 1 is a perspective view of a dental tray system 10 in the embodiment. The dental tray system 10 is used for an bite registration of an edentulous jaw. In the following drawings, a X1X2 direction is a right-to-left direction of the dental tray system 10. A Y1Y2 direction is a front-to-rear direction of the dental tray system 10, and a Z1Z2 direction is an up-to-down direction of the dental tray system 10. In the following explanation, there are cases where a X1 direction indicates right, a X2 direction indicates left, a Y1 direction indicates front, a Y2 direction indicates rearward, a Z1 direction indicates upward, and a Z2 direction indicates downward.

As illustrated in FIG. 1, the dental tray system 10 has a support plate 100, a maxillary impression tray 200, and a mandibular impression tray 300.

The support plate 100 movably supports each of the maxillary impression tray 200 and the mandibular impression tray 300 in the forward and backward directions. An impression material is filled on the maxillary impression tray 200 to take an impression of an upper jaw side of an oral cavity. The impression material is filled on the mandibular impression tray 300 to take an impression of a lower jaw side of the oral cavity.

The support plate 100, the maxillary impression tray 200, and the mandibular impression tray 300 are formed, for example, of a resinous material. Each of the support plate 100, the maxillary impression tray 200, and the mandibular impression tray 300 may be formed of a metal material or the like, and may be formed from a different material.

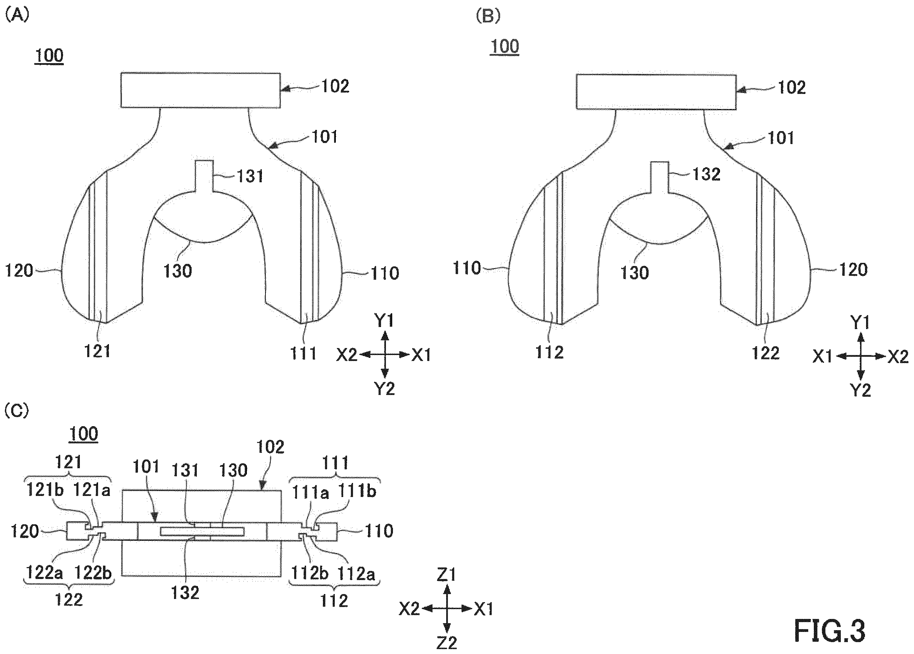

FIG. 2 is a perspective view of the support plate 100 in the embodiment. FIG. 3 is a diagram illustrating the support plate 100 in the embodiment. FIG. 3A is a top view of the support plate 100. FIG. 3B is a bottom view of the support plate 100, and FIG. 3C is a rear view of the support plate 100.

As illustrated in FIG. 2 and FIG. 3, the support plate 100 has a support plate body 101, a handle 102.

The support plate body 101 is a platelike member coupled to the handle 102. The support plate body 101 includes a right support portion 110 projecting from the handle 102 and branching to right and extending backward, and a left support portion 120 branching to left and extending backward. Also, the support plate body 101 includes a support platform 130 that protrudes backward from a central portion connecting the right support portion 110 to the left support portion 120.

On the right support portion 110, a right upper engagement groove 111 is formed on a top surface and a right lower engagement groove 112 is formed on a bottom surface. Each of the right upper engagement groove 111 and the right lower engagement groove 112 is formed parallel to the front-to-rear direction (Y1Y2 direction).

As illustrated in FIG. 3C, the right upper engagement groove 111 includes a groove 111a, and an engagement groove 111b formed by making a dent on a right side of the groove 111a. The right lower engagement groove 112 includes a groove 112a, and an engagement groove 112b formed by making a dent on a left side of the groove 112a.

On the left support portion 120, a left upper engagement groove 121 is formed on a top side and a left lower engagement groove 122 is formed on a bottom side. Each of the left upper engagement groove 121 and the left lower engagement groove 122 is formed parallel to the front-to-rear direction (Y1Y2 direction).

As illustrated in FIG. 3C, the left upper engagement groove 121 includes a groove 121a and an engagement groove 121b formed by making a dent on a left side of the groove 111a. The left lower engagement groove 122 includes a groove 122a and an engagement groove 122b formed by making a dent on a right side of the groove 122a.

Moreover, at a central portion, at which the right support portion 110 and the left support portion 120 are connected on the support plate body 101, an upper central groove 131 is formed on an upper surface side and a lower central groove 132 is formed on a lower surface side. Each of the upper central groove 131 and the lower central groove 132 is formed parallel to the front-to-rear direction (Y1Y2 direction) and is open on one rear end.

The handle 102 is formed in a rectangular plate shape and is coupled to the support plate body 101 on the back side. A user grasps the handle 102 to insert the dental tray system 10 to the oral cavity and to remove the dental tray system 10 from the oral cavity. Also, it is also possible to apply irregularities to the handle 102 and press the impression material to mark a midline, a pupil line, a tilt of a lip, and the like.

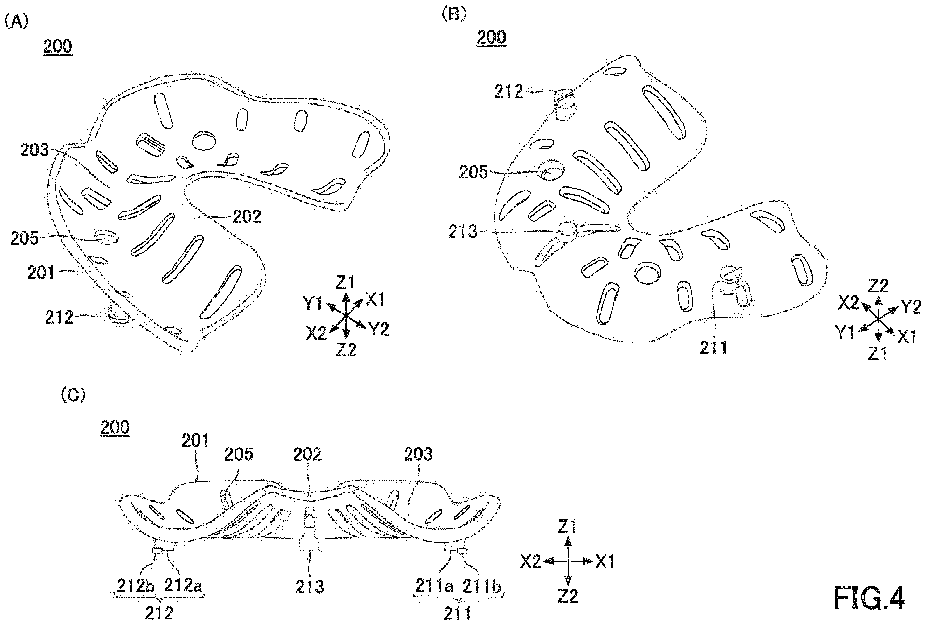

FIG. 4 is a diagram illustrating the maxillary impression tray 200 in the embodiment. FIG. 4A is a perspective view from a top side of the maxillary impression tray 200. FIG. 4B is a perspective view from a lower side of the maxillary impression tray 200. FIG. 4C is a back view of the maxillary impression tray 200.

The maxillary impression tray 200 is filled with on impression material surface 203 between an outer edge 201 and an inner edge 202 to take an impression of the upper jaw side. As illustrated in FIG. 4, the outer edge 201 and the inner edge 202 are formed to curve upward from an outer end and an inner edge of the impression material surface 203, respectively.

On the impression material surface 203, a plurality of through holes 205 penetrating up-to-down direction are formed. The impression material filled on the impression material surface 203 is partially extruded from the through holes 205 to a lower surface side at the impression taking. The impression material extruded from the through holes 205 to the lower surface side expands and is integrated with the maxillary impression tray 200 along with the impression material on the impression material surface 203.

On a lower surface of the maxillary impression tray 200, a right upper engagement pin 211, a left upper engagement pin 212, and an upper central pin 213 are formed. Each of the right upper engagement pin 211, the left upper engagement pin 212, and the upper central pin 213 is formed to project to a Z2 direction from the lower surface of the maxillary impression tray 200.

As illustrated in FIG. 4C, the right upper engagement pin 211 includes a pin body 211a having a cylindrical shape, and an engagement portion 211b projecting to a right side from a lower end of the pin body 211a. The right upper engagement pin 211 is inserted into the right upper engagement groove 111 of the support plate 100 such that the engagement portion 211b fits into and engages the engagement groove 111b.

As illustrated in FIG. 4C, the left upper engagement pin 212 includes a pin body 212a having a cylindrical shape, and an engagement portion 212b projecting to a left side from a lower end of the pin body 212a. The left upper engagement pin 212 is inserted into the left upper engagement groove 121 of the support plate 100 such that the engagement portion 212b fits into and engages the engagement groove 121b.

The upper central pin 213 is formed in a center portion of the maxillary impression tray 200 in the right-to-left direction (X1X2 direction). The upper central pin 213 is formed in a cylindrical shape and is inserted into the upper central groove 131 of the support plate 100.

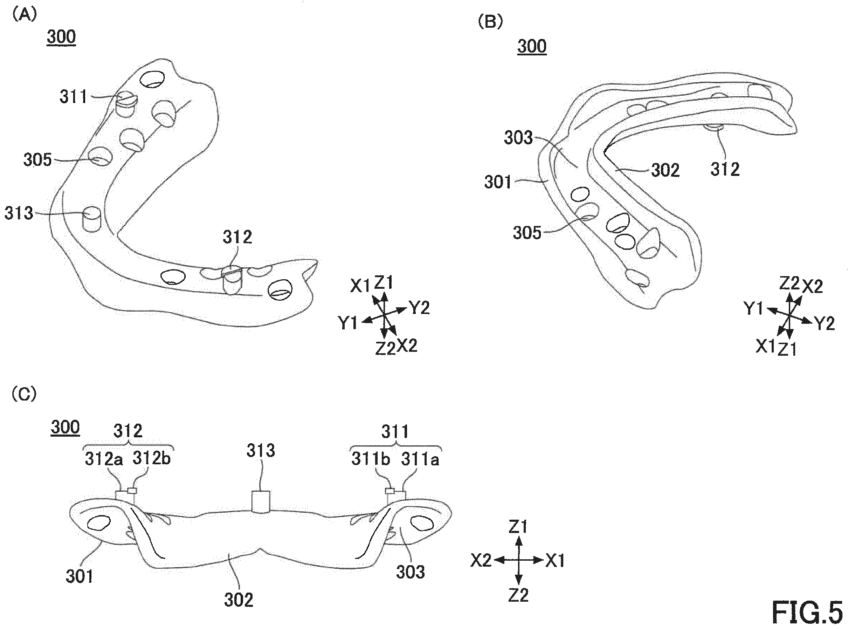

FIG. 5 is a diagram illustrating the mandibular impression tray 300 in the embodiment. FIG. 5A is a perspective view from a top side of the mandibular impression tray 300. FIG. 5B is a perspective view from a lower side of the mandibular impression tray 300. FIG. 5C is a back view of the mandibular impression tray 300.

The mandibular impression tray 300 is filled with on an impression material surface 303 between the outer edge 301 and the inner edge 302 to take the impression of the mandibular side within the oral cavity. As illustrated in FIG. 5, the outer edge 301 and the inner edge 302 are formed so as to curve downward from an outer end and an inner end of the impression material surface 303, respectively.

The impression material surface 303 is formed with the plurality of through holes 305 penetrating the up-to-down direction. The impression material on the impression material surface 303 is partially extruded from the through holes 305 to the upper surface at the impression taking. The impression material extruded from the through holes 305 to the top surface side expands and is integrated with the mandibular impression tray 300 along with the impression material on the impression material surface 303.

On an upper surface of the mandibular impression tray 300, a right lower engagement pin 311, a left lower engagement pin 312, and a lower central pin 313 are formed. Each of the right lower engagement pin 311, the left lower engagement pin 312, and the lower central pin 313 is formed to project from the upper surface of the mandibular impression tray 300 in the Z1 direction.

As illustrated in FIG. 5C, the right lower engagement pin 311 includes a pin body 311a having a cylindrical shape and an engagement portion 311b projecting to left from an upper end of the pin body 311a. The right lower engagement pin 311 is inserted into the right lower engagement groove 112 of the support plate 100 such that the engagement portion 311b fits into and engages the engagement groove 112b.

As illustrated in FIG. 5C, the left lower engagement pin 312 has a pin body 312a having a cylindrical shape, and an engagement portion 312b projecting to the right from the upper end of the pin body 312a. The left lower engagement pin 312 is inserted into the left lower engagement groove 122 of the support plate 100 such that the engagement portion 312b fits into and engages with the engagement groove 122b.

The lower central pin 313 is formed in a center portion of the mandibular impression tray 300 in the right-to-left direction (X1X2 direction). The lower central pin 313 is formed in a cylindrical shape and is inserted into the lower central groove 132 of the support plate 100.

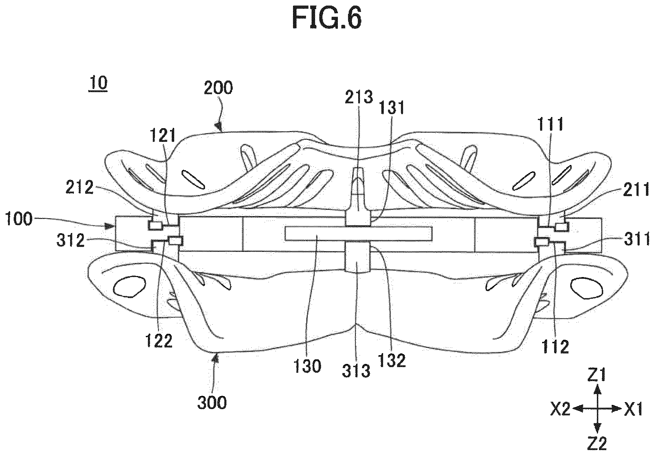

FIG. 6 is a back view of the dental tray system 10 in the embodiment.

As illustrated in FIG. 6, regarding the maxillary impression tray 200, the right upper engagement pin 211, the left upper engagement pin 212, and the upper central pin 213 are inserted into the right upper engagement groove 111, the left upper engagement groove 121, and the upper central groove 131, respectively, and are movably supported in the front-to-rear direction by the support plate 100. Also, by engaging the right upper engagement pin 211 and the left upper engagement pin 212 with the right upper engagement groove 111 and the left upper engagement groove 121 of the support plate 100, respectively, the maxillary impression tray 200 is movably supported in the front-to-rear direction without detaching from the support plate 100.

The right lower engagement pin 311, the left lower engagement pin 312, and the lower central pin 313 are inserted into the right lower engagement groove 112, the left lower engagement groove 122, and the lower central groove 132, respectively, the mandibular impression tray 300 is movably supported in the front-to-rear direction by the support plate 100. Also, the mandibular impression tray 300 is movably supported in the front-to-rear direction without detaching from the support plate 100 by engaging the right lower engagement pin 311 and the left lower engagement pin 312 with the right lower engagement groove 112 and the left lower engagement groove 122 of the support plate 100, respectively.

As illustrated in FIG. 6, the dental tray system 10 is used for the bite registration, in which the impression material is filled in the maxillary impression tray 200 and the mandibular impression tray 300, in a state in which the maxillary impression tray 200 and the mandibular impression tray 300 are supported by the support plate 100.

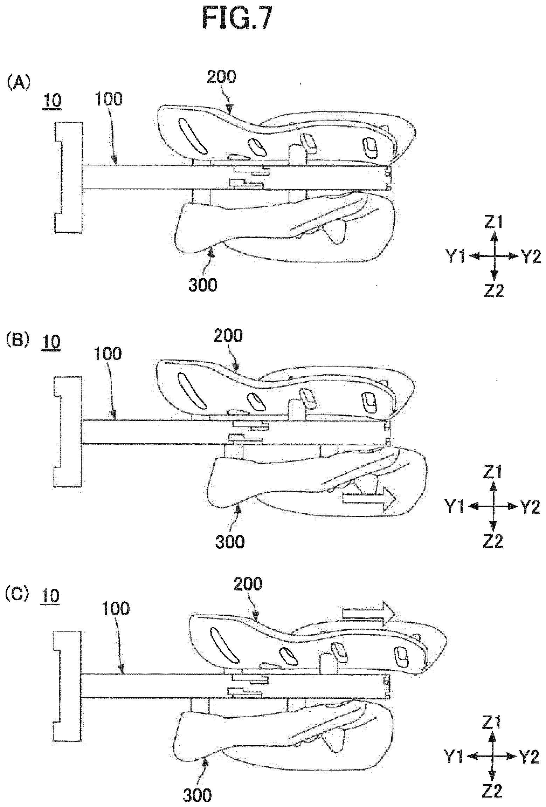

FIG. 7 is a diagram illustrating how the maxillary impression tray 200 and the mandibular impression tray 300 in the embodiment move with respect to the support plate 100.

For example, in a case in which there is no significant misalignment between positions of an upper jaw and a lower jaw of a patient and an occlusal relationship is normal, as illustrated in FIG. 7A, it is possible to perform the bite registration of the patient in a state in which the maxillary impression tray 200 and the mandibular impression tray 300 are placed at approximately the same position in the front-to-rear direction (Y1Y2) direction.

For example, in a case of the occlusion relationship in which the upper jaw protrudes to the lip side rather than the lower jaw, the mandibular impression tray 300 is moved backward in the oral cavity of the patient, as illustrated in FIG. 7B. As described above, by moving the mandibular impression tray 300 backward more than the maxillary impression tray 200, it is possible to accurately perform the bite registration even in the occlusal relationship where the upper jaw protrudes to the lip side more than the lower jaw.

Moreover, for example, in the case of the occlusal relationship where the upper jaw protrudes to the lip side more than the lower jaw, the maxillary impression tray 200 is moved backward in the oral cavity of the patient, as illustrated in FIG. 7C. As described above, by moving the maxillary impression tray 200 backward more than the mandibular impression tray 300, it is possible to accurately perform the bite registration even in the occlusal relationship where the lower jaw protrudes to the lip side more than the upper jaw.

As described above, in the dental tray system 10 in the embodiment, the support plate 100 moveably supports the maxillary impression tray 200 and the mandibular impression tray 300 in the front-to-rear direction, respectively. Accordingly, according to the dental tray system 10 of this embodiment, it is possible to accurately perform the bite registration in response to the anteroposterior displacement of the upper jaw and the lower jaw.

Although the dental tray system according to the embodiment is described above, the present invention is not limited to the above described embodiment, and various modifications and improvements are possible within the scope of the present invention.

For example, shapes of the support plate 100, the maxillary impression tray 200, and the mandibular impression tray 300 are not limited to the shapes illustrated in the embodiment described above. The number of engagement grooves formed on the support plate 100, the number of engagement pins formed on the maxillary impression tray 200, and the mandibular impression tray 300 are not limited to the numbers illustrated in the above described embodiment. Also, the shapes of the engagement grooves formed on the support plate 100, and the shapes of engagement pins formed on the maxillary impression tray 200 and the mandibular impression tray 300 are not limited to the shapes illustrated in the above described embodiment. If the maxillary impression tray 200 and the mandibular impression tray 300 can be moved forward and backward without departing from the support plate 100, the engagement grooves and the engagement pins may be in different shapes from those in the embodiment.

The patent application is based upon and claims the benefit of priority to Japanese Patent Application No. 2016-231327 filed on November 29, 2016, and the entire content of Japanese Patent Application No. 2016-231327 is hereby incorporated herein by reference.

### DESCRIPTION OF THE REFERENCE NUMERALS

- 10, 20, 30: dental tray system
- 100: support plate
- 200: maxillary impression tray
- 300: mandibular impression tray
- 111: right upper engagement groove (upper engagement groove)
- 112: right lower engagement groove (lower engagement groove)
- 121: left upper engagement groove (upper engagement groove)
- 122: lower left engagement groove (lower engagement groove)
- 131: upper central groove
- 132: lower central groove
- 211: right upper engagement pin (upper engagement pin)
- 212: left upper engagement pin (upper engagement pin)
- 213: upper central pin
- 311: right lower engagement pin (lower engagement pin)
- 312: left lower engagement pin (lower engagement pin)
- 313: lower central pin

## Claims

1. A dental tray system, comprising:
a maxillary impression tray configured to be filled with an impression material and to take an impression of an upper jaw side of an oral cavity;
a mandibular impression tray configured to be filled with the impression material and to take the impression of a lower jaw side of the oral cavity; and
a support plate provided between the maxillary impression tray and the mandibular impression tray and configured to movably support the maxillary impression tray and the mandibular impression tray in a front-to-rear direction.

2. The dental tray system as claimed in claim 1, wherein the support plate includes
an upper engagement groove formed along the front-to-rear direction on an upper surface supporting the maxillary impression tray; and
a lower engagement groove formed along the front-to-rear direction on a lower surface supporting the mandibular impression tray,
wherein the maxillary impression tray includes an upper engagement pin, which protrudes toward the support plate to engage the upper engagement groove and is slidable along the upper engagement groove, and
the mandibular impression tray includes a lower engagement pin, which protrudes toward the support plate to engage the lower engagement groove and is slidable along the lower engagement groove.
